# EUROPEAN PATENT APPLICATION

(11) **EP 2 330 605 A1**
(43) Date of publication of application: **08.06.2011**
(21) Application number: 09817516.9
(22) Date of filing: 02.10.2009
(51) Int. Cl.: H01G 9/028

(54) **CAPACITOR MANUFACTURING METHOD**

(30) Priority: 02.10.2008 JP 2008257346
(71) Applicant: Shin-Etsu Polymer Co., Ltd., Tokyo 103-0023 (JP)
(72) Inventor: NING, Tailu, Saitama 331-0811 (JP); FUJIKI, Hironao, Saitama 331-0811 (JP); YOSHIDA, Kazuyoshi, Saitama 331-0811 (JP); SHINGAI, Michiko, Saitama 331-0811 (JP)
(74) Representative: Berkenbrink, Kai-Oliver
(86) International application number: PCT/JP2009/005109
(87) International publication number: WO 2010/038477

(57) **Abstract**

A capacitor manufacturing method that enables a capacitor having a high withstand voltage, a high electrostatic capacitance and a satisfactorily small ESR to be manufactured simply and at a high level of productivity. In the capacitor manufacturing method, a film-formation treatment of applying a conductive polymer solution containing a π-conjugated conductive polymer, a polyanion and a solvent to the dielectric layer side of a capacitor substrate having a dielectric layer formed on the surface of an anode, and then performing drying to form a conductive polymer film, is performed at least twice, and the conductive polymer solution used in at least one film-formation treatment among the second film-formation treatment and subsequent film-formation treatments is a high-viscosity solution having a higher viscosity than the conductive polymer solution used in the first film-formation treatment.

## Description

### TECHNICAL FIELD

The present invention relates to a method for manufacturing a capacitor such as an aluminum electrolytic capacitor, a tantalum electrolytic capacitor or a niobium electrolytic capacitor.
Priority is claimed on Japanese Patent Application No. 2008-257346, filed October 2, 2008, the content of which is incorporated herein by reference.

### BACKGROUND ART

In recent years, the digitalization of electronic equipment has been accompanied by a growing demand for reductions in the high-frequency region impedance (the equivalent series resistance) of the capacitors used in the electronic equipment. Conventionally, in order to satisfy these demands, so-called functional capacitors (hereinafter abbreviated to simply "capacitors") that use an oxide film of a valve metal such as aluminum, tantalum or niobium as a dielectric body have been used.
As disclosed in Patent Document 1, the structures of these capacitors generally include an anode composed of a porous body of a valve metal, a dielectric layer formed by oxidizing the surface of the anode, a conductive solid electrolyte layer, and a cathode composed of a laminated carbon layer or silver layer or the like.
Patent Document 1 discloses a capacitor in which a solid electrolyte is provided on the surface of the dielectric layer, and a layer of a polythiophene is provided on the surface of the solid electrolyte. In Patent Document 1, a material containing a π-conjugated conductive polymer obtained by chemical oxidative polymerization or electrochemical polymerization is used as the solid electrolyte.
Further, as the method of forming the solid electrolyte layer, a method is disclosed that involves dipping a capacitor element having an anode and a dielectric layer in a conductive polymer solution containing a polymer having cyano groups or sulfo groups and a π-conjugated conductive polymer.

### CITATION LIST

### PATENT DOCUMENTS

[Patent Document 1]
   Japanese Unexamined Patent Application, First Publication No. 2005-123630
[Patent Document 2]
   Japanese Unexamined Patent Application, First Publication No. 2005-158482

### DISCLOSURE OF INVENTION

### PROBLEMS TO BE SOLVED BY THE INVENTION

However, in the manufacturing method disclosed in Patent Document 1, in which a conductive polymer layer is formed by chemical oxidative polymerization or electrochemical polymerization on the surface of the dielectric layer, a problem arises in that if thorough washing is not performed following the polymerization, then the withstand voltage tends to fall. However, if thorough washing is conducted in order to prevent this type of problem from occurring, then the productivity of the capacitor tends to deteriorate. Moreover, because the conductive polymer layer formed by the chemical oxidative polymerization or electrochemical polymerization is very thin, the chemical oxidative polymerization or electrochemical polymerization must be repeated a plurality of times to ensure a satisfactory thickness, which also results in low productivity.
Further, in a formation method disclosed in Patent Document 2, although a high withstand voltage is achieved because neither chemical oxidative polymerization nor electrochemical polymerization is employed, the electrostatic capacitance tends to be inadequate, and the equivalent series resistance (ESR) tends not to decrease sufficiently.
Accordingly, an object of the present invention is to provide a capacitor manufacturing method that enables a capacitor having a high withstand voltage, a high electrostatic capacitance and a satisfactorily small ESR to be manufactured simply and at a high level of productivity.

### MEANS TO SOLVE THE PROBLEMS

The present invention includes the aspects described below.
[1] A capacitor manufacturing method having a step of preparing a capacitor substrate by oxidizing the surface of an anode composed of a valve metal to form a dielectric layer, and a step of forming a solid electrolyte layer on the surface of the dielectric layer of the capacitor substrate, wherein
   in the step of forming a solid electrolyte layer, a film-formation treatment of applying a conductive polymer solution containing a π-conjugated conductive polymer, a polyanion and a solvent to the dielectric layer of the capacitor substrate, and then performing drying to form a conductive polymer film is performed at least twice, and
   the conductive polymer solution used in at least one film-formation treatment among the second film-formation treatment and subsequent film-formation treatments is a high-viscosity solution having a higher viscosity than the conductive polymer solution used in the first film-formation treatment.
[2] The capacitor manufacturing method according to [1], wherein the viscosity of the conductive polymer solution used in the first film-formation treatment is within a range from 5 to 100 mPa·s.
[3] The capacitor manufacturing method according to [2], wherein the difference between the viscosity of the above-mentioned high-viscosity solution and the viscosity of the conductive polymer solution used in the first film-formation treatment is at least 50 mPa·s.
[4] The capacitor manufacturing method according to any one of [1] to [3], wherein the pH of the conductive polymer solution used in the first film-formation treatment is within a range from 3 to 11.

### EFFECT OF THE INVENTION

The capacitor manufacturing method of the present invention enables a capacitor having a high withstand voltage, a high electrostatic capacitance and a satisfactorily small ESR to be manufactured simply and at a high level of productivity.

### BRIEF DESCRIPTION OF THE DRAWINGS

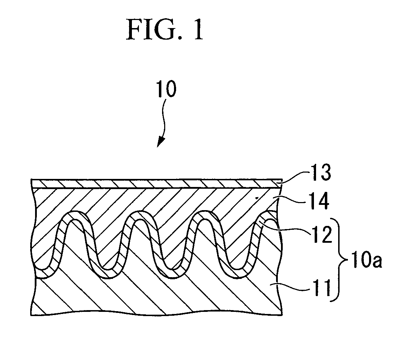

FIG. 1 is a cross-sectional schematic view illustrating one example of a capacitor manufactured by the capacitor manufacturing method of the present invention.

### EMBODIMENTS FOR CARRYING OUT THE INVENTION

The capacitor manufacturing method of the present invention is described below.

### (Capacitor)

FIG. 1 illustrates one example of a capacitor manufactured using the capacitor manufacturing method of the present invention. This capacitor 10 includes an anode 11, a dielectric layer 12 that is formed by oxidation of the surface of the anode 11, a cathode 13, and a solid electrolyte layer 14 that is formed between the dielectric layer 12 and the cathode 13.

The anode 11 is formed from a valve metal. Examples of the valve metal include aluminum, tantalum, niobium, titanium, hafnium, zirconium, zinc, tungsten, bismuth and antimony. Of these, aluminum, tantalum and niobium are preferred.
Specific examples of the anode 11 include sintered bodies of tantalum particles or niobium particles, and anodes prepared by etching an aluminum foil to increase the surface area. This type of anode 11 is porous.
The dielectric layer 12 is an oxidized film of the anode 11.
Examples of the cathode 13 include cathodes formed from a conductor such as carbon, silver or aluminum or the like.
The solid electrolyte layer 14 contains a π-conjugated conductive polymer and a polyanion as essential components, and may include a conductivity improver as an optional component.

### [π-Conjugated Conductive Polymer]

There are no particular limitations on the π-conjugated conductive polymer contained within the solid electrolyte layer 14, and any organic polymer in which the main chain is composed of a π-conjugated system may be used. Examples include polypyrroles, polythiophenes, polyacetylenes, polyphenylenes, polyphenylenevinylenes, polyanilines, polyacenes, polythiophenevinylenes, and copolymers thereof. In terms of the stability of the polymer in air, polypyrroles, polythiophenes and polyanilines are preferred.
The π-conjugated conductive polymer is able to provide adequate conductivity and exhibits satisfactory compatibility with binder resins even in an unsubstituted form, but in order to further enhance the conductivity and compatibility, it is preferable that functional groups such as alkyl groups, carboxyl groups, sulfo groups, alkoxyl groups or hydroxyl groups are introduced into the π-conjugated conductive polymer.

Specific examples of this type of π-conjugated conductive polymer include polypyrrole, poly(N-methylpyrrole), poly(3-methylpyrrole), poly(3-ethylpyrrole), poly(3-n-propylpyrrole), poly(3-butylpyrrole), poly(3-octylpyrrole), poly(3-decylpyrrole), poly(3-dodecylpyrrole), poly(3,4-dimethylpyrrole), poly(3,4-dibutylpyrrole), poly(3-carboxypyrrole), poly(3-methyl-4-carboxypyrrole), poly(3-methyl-4-carboxyethylpyrrole), poly(3-methyl-4-carboxybutylpyrrole), poly(3-hydroxypyrrole), poly(3-methoxypyrrole), poly(3-ethoxypyrrole), poly(3-butoxypyrrole), poly(3-methyl-4-hexyloxypyrrole), polythiophene, poly(3-methylthiophene), poly(3-ethylthiophene), poly(3-propylthiophene), poly(3-butylthiophene), poly(3-hexylthiophene), poly(3-heptylthiophene), poly(3-octylthiophene), poly(3-decylthiophene), poly(3-dodecylthiophene), poly(3-octadecylthiophene), poly(3-bromothiophene), poly(3-chlorothiophene), poly(3-iodothiophene), poly(3-cyanothiophene), poly(3-phenylthiophene), poly(3,4-dimethylthiophene), poly(3,4-dibutylthiophene), poly(3-hydroxythiophene), poly(3-methoxythiophene), poly(3-ethoxythiophene), poly(3-butoxythiophene), poly(3-hexyloxythiophene), poly(3-heptyloxythiophene), poly(3-octyloxythiophene), poly(3-decyloxythiophene), poly(3-dodecyloxythiophene), poly(3-octadecyloxythiophene), poly(3-methyl-4-methoxythiophene), poly(3,4-ethylenedioxythiophene), poly(3-methyl-4-ethoxythiophene), poly(3-carboxythiophene), poly(3-methyl-4-carboxythiophene), poly(3-methyl-4-carboxyethylthiophene), poly(3-methyl-4-carboxybutylthiophene), polyaniline, poly(2-methylaniline), poly(3-isobutylaniline), poly(2-anilinesulfonic acid), and poly(3-anilinesulfonic acid). Of these, in terms of conductivity and heat resistance, poly(3,4-ethylenedioxythiophene) is preferred.

### [Polyanion]

Examples of the polyanion include substituted or unsubstituted polyalkylenes, substituted or unsubstituted polyalkenylenes, substituted or unsubstituted polyimides, substituted or unsubstituted polyamides and substituted or unsubstituted polyesters, wherein the polymer is either composed solely of structural units having an anion group, or composed of structural units having an anion group and structural units having no anion group.

A polyalkylene is a polymer in which the main chain is composed of repeating methylene units.
A polyalkenylene is a polymer composed of structural units having one unsaturated bond (vinyl group) within the main chain.
Examples of the polyimides include polyimides formed from an acid anhydride such as pyromellitic dianhydride, biphenyltetracarboxylic dianhydride, benzophenone tetracarboxylic dianhydride or 2,2'-[4,4'-di(dicarboxyphenyloxy)phenyl]propane dianhydride, and a diamine such as oxydiamine, para-phenylenediamine, meta-phenylenediamine or benzophenonediamine.
Examples of the polyamides include polyamide 6, polyamide 6,6 and polyamide 6,10 and the like.
Examples of the polyesters include polyethylene terephthalate and polybutylene terephthalate.

In those cases where the polyanion includes substituents, examples of those substituents include alkyl groups, hydroxyl groups, amino groups, carboxyl groups, cyano groups, phenyl groups, phenol groups, ester groups and alkoxyl groups. Considering factors such as the solubility of the polyanion in organic solvents, the heat resistance, and the compatibility of the polyanion with resins, alkyl groups, hydroxyl groups, phenol groups and ester groups are preferred.

Examples of the alkyl groups include alkyl groups such as methyl, ethyl, propyl, butyl, isobutyl, t-butyl, pentyl, hexyl, octyl, decyl and dodecyl groups, and cycloalkyl groups such as cyclopropyl, cyclopentyl and cyclohexyl groups.
Examples of the hydroxyl groups include hydroxyl groups bonded directly to the main chain of the polyanion, and hydroxyl groups bonded to the main chain via other functional groups. Examples of these other functional groups include alkyl groups of 1 to 7 carbon atoms, alkenyl groups of 2 to 7 carbon atoms, amide groups and imide groups and the like. The hydroxyl groups may be substituted at either the terminal of these functional groups, or at non-terminal positions within the functional groups.
Examples of the amino groups include amino groups bonded directly to the main chain of the polyanion, and amino groups bonded to the main chain via other functional groups. Examples of these other functional groups include alkyl groups of 1 to 7 carbon atoms, alkenyl groups of 2 to 7 carbon atoms, amide groups and imide groups and the like. The amino groups may be substituted at either the terminal of these functional groups, or at non-terminal positions within the functional groups.
Examples of the phenol groups include phenol groups bonded directly to the main chain of the polyanion, and phenol groups bonded to the main chain via other functional groups. Examples of these other functional groups include alkyl groups of 1 to 7 carbon atoms, alkenyl groups of 2 to 7 carbon atoms, amide groups and imide groups and the like. The phenol groups may be substituted at either the terminal of these functional groups, or at non-terminal positions within the functional groups.

Examples of the polyalkylenes having a substituent include polyethylene, polypropylene, polybutene, polypentene, polyhexene, polyvinyl alcohol, polyvinylphenol, poly(3,3,3-trifluoropropylene), polyacrylonitrile, polyacrylate and polystyrene.
Specific examples of the polyalkenylenes include polymers containing one or more structural units selected from amongst propenylene, 1-methylpropenylene, 1-butylpropenylene, 1-decylpropenylene, 1-cyanopropenylene, 1-phenylpropenylene, 1-hydroxypropenylene, 1-butenylene, 1-methyl-1-butenylene, 1-ethyl-1-butenylene, 1-octyl-1-butenylene, 1-pentadecyl-1-butenylene, 2-methyl-1-butenylene, 2-ethyl-1-butenylene, 2-butyl-1-butenylene, 2-hexyl-1-butenylene, 2-octyl-1-butenylene, 2-decyl-1-butenylene, 2-dodecyl-1-butenylene, 2-phenyl-1-butenylene, 2-butenylene, 1-methyl-2-butenylene, 1-ethyl-2-butenylene, 1-octyl-2-butenylene, 1-pentadecyl-2-butenylene, 2-methyl-2-butenylene, 2-ethyl-2-butenylene, 2-butyl-2-butenylene, 2-hexyl-2-butenylene, 2-octyl-2-butenylene, 2-decyl-2-butenylene, 2-dodecyl-2-butenylene, 2-phenyl-2-butenylene, 2-propylenephenyl-2-butenylene, 3-methyl-2-butenylene, 3-ethyl-2-butenylene, 3-butyl-2-butenylene, 3-hexyl-2-butenylene, 3-octyl-2-butenylene, 3-decyl-2-butenylene, 3-dodecyl-2-butenylene, 3-phenyl-2-butenylene, 3-propylenephenyl-2-butenylene, 2-pentenylene, 4-propyl-2-pentenylene, 4-propyl-2-pentenylene, 4-butyl-2-pentenylene, 4-hexyl-2-pentenylene, 4-cyano-2-pentenylene, 3-methyl-2-pentenylene, 4-ethyl-2-pentenylene, 3-phenyl-2-pentenylene, 4-hydroxy-2-pentenylene, and hexenylene and the like.

Examples of the anion group of the polyanion include -O-SO₃⁻X⁺, -SO₃⁻X⁺, and - COO⁻X⁺ (wherein, X⁺ in each of the formulas represents a hydrogen ion or an alkali metal ion). In other words, the polyanion is a polymer acid containing sulfo groups and/or carboxyl groups. Of the above anion groups, from the viewpoint of achieving favorable doping of the π-conjugated conductive polymer, -SO₃⁻X⁺ and -COO⁻X⁺ groups are preferred.
Furthermore, these anion groups may be positioned on adjacent units within the main chain of the polyanion, or with a predetermined spacing therebetween.

Of the above polyanions, in terms of solvent solubility and conductivity, polyisoprenesulfonic acid, copolymers that include polyisoprenesulfonic acid, poly(sulfoethyl methacrylate), copolymers that include poly(sulfoethyl methacrylate), poly(4-sulfobutyl methacrylate), copolymers that include poly(4-sulfobutyl methacrylate), polymethacryloxybenzenesulfonic acid, copolymers that include polymethacryloxybenzenesulfonic acid, polystyrenesulfonic acid, and copolymers that include polystyrenesulfonic acid are preferred.

The polymerization degree of the polyanion is preferably within a range from 10 to 100,000 monomer units, and from the viewpoints of solvent solubility and conductivity is more preferably within a range from 50 to 10,000 monomer units.

The amount of the polyanion is preferably within a range from 0.1 to 10 mols, and more preferably from 1 to 7 mols, per 1 mol of the π-conjugated conductive polymer. If the amount of the polyanion is less than 0.1 mols, then the doping effect on the π-conjugated conductive polymer tends to weaken, and the conductivity may be unsatisfactory. Moreover, the dispersibility or solubility within solvents also deteriorates, making it difficult to obtain a uniform dispersion. Furthermore, if the amount of the polyanion exceeds 10 mols, then the amount of the π-conjugated conductive polymer diminishes, making it difficult to achieve satisfactory conductivity.

The polyanion is coordinated to the π-conjugated conductive polymer. Accordingly, the π-conjugated conductive polymer and the polyanion form a complex.
The combined amount of the π-conjugated conductive polymer and the polyanion is typically within a range from 0.05 to 5.0 mass%, and preferably from 0.1 to 4.0 mass%. If the combined amount of the π-conjugated conductive polymer and the polyanion is less than 0.05 mass%, then satisfactory conductivity may not be obtainable, whereas if the amount exceeds 5.0 mass%, then a uniform solid electrolyte layer 14 may not be obtainable.

### (Conductivity Improver)

The conductivity improver improves the conductivity of the solid electrolyte layer 13a.
Specifically, the conductivity improver is at least one compound selected from the group consisting of nitrogen-containing aromatic cyclic compounds, compounds containing two or more hydroxyl groups, compounds containing two or more carboxyl groups, compounds containing one or more hydroxyl groups and one or more carboxyl groups, compounds containing an amide group, compounds containing an imide group, lactam compounds, compounds containing a glycidyl group, silane coupling agents and water-soluble organic solvents.

### [Nitrogen-containing aromatic cyclic compounds]

Examples of the nitrogen-containing aromatic cyclic compounds include compounds containing a single nitrogen atom such as pyridines and derivatives thereof, compounds containing two nitrogen atoms such as imidazoles and derivatives thereof, pyrimidines and derivatives thereof, and pyrazines and derivatives thereof, and compounds containing three nitrogen atoms such as triazines and derivatives thereof. From the viewpoint of the solubility within solvents, pyridines and derivatives thereof, imidazoles and derivatives thereof, and pyrimidines and derivatives thereof are preferred.

Specific examples of the pyridines and derivatives thereof include pyridine, 2-methylpyridine, 3-methylpyridine, 4-methylpyridine, 4-ethylpyridine, N-vinylpyridine, 2,4-dimethylpyridine, 2,4,6-trimethylpyridine, 3-cyano-5-methylpyridine, 2-pyridinecarboxylic acid, 6-methyl-2-pyridinecarboxylic acid, 4-pyridinecarboxaldehyde, 4-aminopyridine, 2,3-diaminopyridine, 2,6-diaminopyridine, 2,6-diamino-4-methylpyridine, 4-hydroxypyridine, 4-pyridinemethanol, 2,6-dihydroxypyridine, 2,6-pyridinedimethanol, methyl 6-hydroxynicotinate, 2-hydroxy-5-pyridinemethanol, ethyl 6-hydroxynicotinate, 4-pyridinemethanol, 4-pyridineethanol, 2-phenylpyridine, 3-methylquinoline, 3-ethylquinoline, quinolinol, 2,3-cyclopentenopyridine, 2,3-cyclohexanopyridine, 1,2-di(4-pyridyl)ethane, 1,2-di(4-pyridyl)propane, 2-pyridinecarboxaldehyde, 2-pyridinecarboxylic acid, 2-pyridinecarbonitrile, 2,3-pyridinedicarboxylic acid, 2,4-pyridinedicarboxylic acid, 2,5-pyridinedicarboxylic acid, 2,6-pyridinedicarboxylic acid and 3-pyridinesulfonic acid.

Specific examples of the imidazoles and derivatives thereof include imidazole, 2-methylimidazole, 2-propylimidazole, 2-undecylimidazole, 2-phenylimidazole, N-methylimidazole, N-vinylimidazole, N-allylimidazole, 1-(2-hydroxyethyl)imidazole (N-hydroxyethylimidazole), 2-ethyl-4-methylimidazole, 1,2-dimethylimidazole, 1-benzyl-2-methylimidazole, 1-benzyl-2-phenylimidazole, 1-cyanoethyl-2-methylimidazole, 1-cyanoethyl-2-ethyl-4-methylimidazole, 2-phenyl-4,5-dihydroxymethylimidazole, 1-acetylimidazole, 4,5-imidazoledicarboxylic acid, dimethyl 4,5-imidazoledicarboxylate, benzimidazole, 2-aminobenzimidazole, 2-aminobenzimidazole-2-sulfonic acid, 2-amino-1-methylbenzimidazole, 2-hydroxybenzimidazole and 2-(2-pyridyl)benzimidazole.

Specific examples of the pyrimidines and derivatives thereof include 2-amino-4-chloro-6-methylpyrimidine, 2-amino-6-chloro-4-methoxypyrimidine, 2-amino-4,6-dichloropyrimidine, 2-amino-4,6-dihydroxypyrimidine, 2-amino-4,6-dimethylpyrimidine, 2-amino-4,6-dimethoxypyrimidine, 2-aminopyrimidine, 2-amino-4-methylpyrimidine, 4,6-dihydroxypyrimidine, 2,4-dihydroxypyrimidine-5-carboxylic acid, 2,4,6-triaminopyrimidine, 2,4-dimethoxypyrimidine, 2,4,5-trihydroxypyrimidine and 2,4-pyrimidinediol.

Specific examples of the pyrazines and derivatives thereof include pyrazine, 2-methylpyrazine, 2,5-dimethylpyrazine, pyrazinecarboxylic acid, 2,3-pyrazinedicarboxylic acid, 5-methylpyrazinecarboxylic acid, pyrazinamide, 5-methylpyrazinamide, 2-cyanopyrazine, aminopyrazine, 3-aminopyrazine-2-carboxylic acid, 2-ethyl-3-methylpyrazine, 2,3-dimethylpyrazine and 2,3-diethylpyrazine.

Specific examples of the triazines and derivatives thereof include 1,3,5-triazine, 2-amino-1,3,5-triazine, 3-amino-1,2,4-triazine, 2,4-diamino-6-phenyl-1,3,5-triazine, 2,4,6-triamino-1,3,5-triazine, 2,4,6-tris(trifluoromethyl)-1,3,5-triazine, 2,4,6-tri-2-pyridyl-1,3,5-triazine, 3-(2-pyridyl)-5,6-bis(4-phenylsulfonic acid)-1,2,4-triazine disodium, 3-(2-pyridyl)-5,6-diphenyl-1,2,4-triazine, 3-(2-pyridyl)-5,6-diphenyl-1,2,4-triazine-p,p'-disulfonic acid disodium and 2-hydroxy-4,6-dichloro-1,3,5-triazine.

The amount of the nitrogen-containing aromatic cyclic compound is preferably within a range from 0.1 to 100 mols, and more preferably from 0.5 to 30 mols, per 1 mol of anionic group units within the polyanion. From the viewpoints of the physical properties and conductivity of the solid electrolyte layer 14, this amount is most preferably within a range from 1 to 10 mols. If the amount of the nitrogen-containing aromatic cyclic compound is less than 0.1 mols, then the interaction between the nitrogen-containing aromatic cyclic compound and the polyanion and π-conjugated conductive polymer tends to weaken, and the resulting conductivity may be inadequate. In contrast, if the amount of the nitrogen-containing aromatic cyclic compound exceeds 100 mols, then the amount of the π-conjugated conductive polymer is reduced, which makes it difficult to achieve a satisfactory degree of conductivity.

### [Compounds containing two or more hydroxyl groups]

Examples of the compounds containing two or more hydroxyl groups include polyhydric aliphatic alcohols such as propylene glycol, 1,3-butylene glycol, 1,4-butylene glycol, D-glucitol, isoprene glycol, dimethylolpropionic acid, butanediol, 1,5-pentanediol, 1,6-hexanediol, 1,9-nonanediol, neopentyl glycol, trimethylolethane, trimethylolpropane, pentaerythritol, dipentaerythritol, thiodiethanol, glucose, tartaric acid, D-glucaric acid and glutaconic acid;
polymer alcohols such as cellulose, polysaccharides and sugar alcohols;
aromatic compounds such as 1,4-dihydroxybenzene, 1,3-dihydroxybenzene, 2,3-dihydroxy-1-pentadecylbenzene, 2,4-dihydroxyacetophenone, 2,5-dihydroxyacetophenone, 2,4-dihydroxybenzophenone, 2,6-dihydroxybenzophenone, 3,4-dihydroxybenzophenone, 3,5-dihydroxybenzophenone, 2,4'-dihydroxydiphenylsulfone, 2,2',5,5'-tetrahydroxydiphenylsulfone, 3,3',5,5'-tetramethyl-4,4'-dihydroxydiphenylsulfone, hydroxyquinonecarboxylic acid and salts thereof, 2,3-dihydroxybenzoic acid, 2,4-dihydroxybenzoic acid, 2,5-dihydroxybenzoic acid, 2,6-dihydroxybenzoic acid, 3,5-dihydroxybenzoic acid, 1,4-hydroquinonesulfonic acid and salts thereof, 4,5-hydroxybenzene-1,3-disulfonic acid and salts thereof, 1,5-dihydroxynaphthalene, 1,6-dihydroxynaphthalene, 2,6-dihydroxynaphthalene, 2,7-dihydroxynaphthalene, 2,3-dihydroxynaphthalene, 1,5-dihydroxynaphthalene-2,6-dicarboxylic acid, 1,6-dihydroxynaphthalene-2,5-dicarboxylic acid, 1,5-dihydroxynaphthoic acid, phenyl 1,4-dihydroxy-2-naphthoate, 4,5-dihydroxynaphthalene-2,7-disulfonic acid and salts thereof, 1,8-dihydroxy-3,6-naphthalenedisulfonic acid and salts thereof, 6,7-dihydroxy-2-naphthalenesulfonic acid and salts thereof, 1,2,3-trihydroxybenzene (pyrogallol), 1,2,4-trihydroxybenzene, 5-methyl-1,2,3-trihydroxybenzene, 5-ethyl-1,2,3-trihydroxybenzene, 5-propyl-1,2,3-trihydroxybenzene, trihydroxybenzoic acid, trihydroxyacetophenone, trihydroxybenzophenone, trihydroxybenzaldehyde, trihydroxyanthraquinone, 2,4,6-trihydroxybenzene, tetrahydroxy-p-benzoquinone, tetrahydroxyanthraquinone, methyl gallate and ethyl gallate; and potassium hydroquinone sulfonate.

The amount of the compound containing two or more hydroxyl groups is preferably within a range from 0.05 to 50 mols, and more preferably from 0.3 to 10 mols, per 1 mol of anionic group units within the polyanion. If the amount of the compound containing two or more hydroxyl groups is less than 0.05 mols per 1 mol of anionic group units within the polyanion, then the resulting conductivity and heat resistance may be inadequate. In contrast, if the amount of the compound containing two or more hydroxyl groups exceeds 50 mols per 1 mol of anionic group units within the polyanion, then the amount of the π-conjugated conductive polymer within the solid electrolyte layer 14 is reduced, which makes it difficult to achieve a satisfactory degree of conductivity.

### [Compounds containing two or more carboxyl groups]

Examples of the compounds containing two or more carboxyl groups include aliphatic carboxylic acid compounds such as maleic acid, fumaric acid, itaconic acid, citraconic acid, malonic acid, 1,4-butanedicarboxylic acid, succinic acid, tartaric acid, adipic acid, D-glucaric acid, glutaconic acid and citric acid;
aromatic carboxylic acid compounds containing at least one carboxyl group bonded to an aromatic ring, such as phthalic acid, terephthalic acid, isophthalic acid, tetrahydrophthalic anhydride, 5-sulfoisophthalic acid, 5-hydroxyisophthalic acid, methyltetrahydrophthalic anhydride, 4,4'-oxydiphthalic acid, biphenyltetracarboxylic dianhydride, benzophenonetetracarboxylic dianhydride, naphthalenedicarboxylic acid, trimellitic acid and pyromellitic acid; as well as diglycolic acid, oxydibutyric acid, thiodiacetic acid, thiodibutyric acid, iminodiacetic acid and iminobutyric acid.

The amount of the compound containing two or more carboxyl groups is preferably within a range from 0.1 to 30 mols, and more preferably from 0.3 to 10 mols, per 1 mol of anionic group units within the polyanion. If the amount of the compound containing two or more carboxyl groups is less than 0.1 mols per 1 mol of anionic group units within the polyanion, then the resulting conductivity and heat resistance may be inadequate. In contrast, if the amount of the compound containing two or more carboxyl groups exceeds 30 mols per 1 mol of anionic group units within the polyanion, then the amount of the π-conjugated conductive polymer within the solid electrolyte layer 14 is reduced, which makes it difficult to achieve a satisfactory degree of conductivity, and may alter the physical properties of the solid electrolyte layer 14.

### [Compounds containing one or more hydroxyl groups and one or more carboxyl groups]

Examples of the compounds containing one or more hydroxyl groups and one or more carboxyl groups include tartaric acid, glyceric acid, dimethylolbutanoic acid, dimethylolpropanoic acid, D-glucaric acid and glutaconic acid.

The amount of the compound containing one or more hydroxyl groups and one or more carboxyl groups is preferably within a range from 1 to 5,000 parts by mass, and more preferably from 50 to 500 parts by mass, per 100 parts by mass of the combination of the polyanion and the π-conjugated conductive polymer. If the amount of the compound containing one or more hydroxyl groups and one or more carboxyl groups is less than 1 part by mass, then the resulting conductivity and heat resistance may be inadequate. In contrast, if the amount of the compound containing one or more hydroxyl groups and one or more carboxyl groups exceeds 5,000 parts by mass, then the amount of the π-conjugated conductive polymer within the solid electrolyte layer 14 is reduced, making it difficult to achieve a satisfactory degree of conductivity.

### [Amide compounds]

The amide compounds are monomolecular compounds having an amide linkage represented by -CO-NH- (wherein the CO portion incorporates a double bond) within the molecule. In other words, examples of the amide compounds include compounds that contain functional groups at both terminals of the above linkage, compounds in which a cyclic compound is bonded to one of the terminals of the above linkage, urea, in which the functional groups at both of the above terminals are hydrogen atoms, and urea derivatives.
Specific examples of the amide compound include acetamide, malonamide, succinamide, maleamide, fumaramide, benzamide, naphthamide, phthalamide, isophthalamide, terephthalamide, nicotinamide, isonicotinamide, 2-furamide, formamide, N-methylformamide, propionamide, propiolamide, butyramide, isobutyramide, methacrylamide, palmitamide, stearamide, oleamide, oxamide, glutaramide, adipamide, cinnamamide, glucolamide, lactamide, glyceramide, tartaramide, citramide, glyoxylamide, pyruvamide, acetoacetamide, dimethylacetamide, benzylamide, anthranylamide, ethylenediaminetetraacetamide, diacetamide, triacetamide, dibenzamide, tribenzamide, rhodanine, urea, 1-acetyl-2-thiourea, biuret, butylurea, dibutylurea, 1,3-dimethylurea, 1,3-diethylurea, and derivatives thereof.

Furthermore, acrylamides may also be used as amide compounds. Specific examples of these acrylamides include N-methylacrylamide, N-methylmethacrylamide, N-ethylacrylamide, N-ethylmethacrylamide, N,N-dimethylacrylamide, N,N-dimethylmethacrylamide, N,N-diethylacrylamide, N,N-diethylmethacrylamide, 2-hydroxyethylacrylamide, 2-hydroxyethylmethacrylamide, N-methylolacrylamide and N-methylolmethacrylamide.

The molecular weight of the amide compound is preferably within a range from 46 to 10,000, more preferably from 46 to 5,000, and still more preferably from 46 to 1,000.

The amount of the amide compound is preferably within a range from 1 to 5,000 parts by mass, and more preferably from 50 to 500 parts by mass, per 100 parts by mass of the combination of the polyanion and the π-conjugated conductive polymer. If the amount of the amide compound is less than 1 part by mass, then the conductivity and the heat resistance may be inadequate. Further, if the amount of the amide compound exceeds 5,000 parts by mass, then the amount of the π-conjugated conductive polymer within the solid electrolyte layer 14 is reduced, making it difficult to achieve a satisfactory degree of conductivity.

### [Imide compounds]

As the amide compound, a monomolecular compound containing an imide linkage (hereinafter referred to as an imide compound) is preferred, as it yields a greater improvement in the conductivity. Examples of the imide compound, described in terms of the molecular skeleton, include phthalimide and phthalimide derivatives, succinimide and succinimide derivatives, benzimide and benzimide derivatives, maleimide and maleimide derivatives, and naphthalimide and naphthalimide derivatives.

Further, the imide compounds are classified as either aliphatic imides or aromatic imides or the like on the basis of the functional groups at the two terminals, and from the viewpoint of solubility, aliphatic imides are preferred.
Moreover, aliphatic imide compounds can be classified into saturated aliphatic imide compounds, which contain no unsaturated bonds between the carbon atoms within the molecule, and unsaturated aliphatic imide compounds, which contain one or more unsaturated bonds between the carbon atoms within the molecule.
Saturated aliphatic imide compounds are compounds represented by the formula: R¹-CO-NH-CO-R², wherein R¹ and R² are both saturated hydrocarbon groups. Specific examples include cyclohexane-1,2-dicarboximide, allantoin, hydantoin, barbituric acid, alloxan, glutarimide, succinimide, 5-butylhydantoic acid, 5,5-dimethylhydantoin, 1-methylhydantoin, 1,5,5-trimethylhydantoin, 5-hydantoinacetic acid, N-hydroxy-5-norbomene-2,3-dicarboximide, semicarbazide, α,α-dimethyl-6-methylsuccinimide, bis[2-(succinimidooxycarbonyloxy)ethyl]sulfone, α-methyl-α-propylsuccinimide and cyclohexylimide.
Unsaturated aliphatic imide compounds are compounds represented by the formula: R¹-CO-NH-CO-R², wherein either one of, or both, R¹ and R² contain one or more unsaturated bonds. Specific examples include 1,3-dipropyleneurea, maleimide, N-methylmaleimide, N-ethylmaleimide, N-hydroxymaleimide, 1,4-bismaleimidobutane, 1,6-bismaleimidohexane, 1,8-bismaleimidooctane and N-carboxyheptylmaleimide.

The molecular weight of the imide compound is preferably within a range from 60 to 5,000, more preferably from 70 to 1,000, and still more preferably from 80 to 500.

The amount of the imide compound is preferably within a range from 10 to 10,000 parts by mass, and more preferably from 50 to 5,000 parts by mass, per 100 parts by mass of the combination of the π-conjugated conductive polymer and the polyanion. If the amount added of the imide compound is less than the lower limit of the range mentioned above, then the effects achieved by adding the imide compound tend to diminish, which is undesirable. In contrast, if the amount exceeds the upper limit of the above range, then the conductivity tends to decrease as a result of a reduction in the concentration of the π-conjugated conductive polymer, which is also undesirable.

### [Lactam compounds]

A lactam compound is an intramolecular cyclic amide of an aminocarboxylic acid, and is a compound in which a portion of the ring can be represented by -CO-NR-(wherein R is a hydrogen atom or an arbitrary substituent). One or more of the carbon atoms within the ring may be unsaturated or substituted for a hetero atom.
Examples of the lactam compounds include pentano-4-lactam, 4-pentanelactam-5-methyl-2-pyrrolidone, 5-methyl-2-pyrrolidinone, hexano-6-lactam, and 6-hexanelactam.

The amount of the lactam compound is preferably within a range from 10 to 10,000 parts by mass, and more preferably from 50 to 5,000 parts by mass, per 100 parts by mass of the combination of the π-conjugated conductive polymer and the polyanion. If the amount added of the lactam compound is less than the lower limit of the above-mentioned range, then the conductivity and the heat resistance may be inadequate. In contrast, if the amount exceeds the upper limit of the above range, then the conductivity tends to decrease as a result of the reduction in the concentration of the π-conjugated conductive polymer, which is also undesirable.

### [Compounds containing a glycidyl group]

Examples of the compounds containing a glycidyl group include glycidyl compounds such as ethyl glycidyl ether, butyl glycidyl ether, t-butyl glycidyl ether, allyl glycidyl ether, benzyl glycidyl ether, glycidyl phenyl ether, bisphenol A, diglycidyl ether, glycidyl ether acrylate and glycidyl ether methacrylate.

The amount of the compound containing a glycidyl group is preferably within a range from 10 to 10,000 parts by mass, and more preferably from 50 to 5,000 parts by mass, per 100 parts by mass of the combination of the π-conjugated conductive polymer and the polyanion. If the amount added of the compound containing a glycidyl group is less than the lower limit of the above-mentioned range, then the conductivity and the heat resistance may be inadequate. In contrast, if the amount exceeds the upper limit of the above range, then the conductivity tends to decrease as a result of the reduction in the concentration of the π-conjugated conductive polymer, which is also undesirable.

### [Silane coupling agents]

Specific examples of the silane coupling agents include vinyltrichlorosilane, vinyltrimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylinethyldimethoxysilane, 3-methacryloxypropyltrimethoxysilane, 3-methacryloxypropylmethyldiethoxysilane, 3 - methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltriethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane hydrochloride, 3-ureidopropyltriethoxysilane, 3-chloropropyltrimethoxysilane, 3-mercaptopropylmethyldimethoxysilane, 3-mercaptopropyltrimethoxysilane, bis(triethoxysilylpropyl)tetrasulfide and 3-isocyanatopropyltriethoxysilane.

There are no particular limitations on the amount of the silane coupling agent, and any appropriate amount may be added according to need. An amount within a range from 10 to 10,000 parts by mass per 100 parts by mass of the combination of the π-conjugated conductive polymer and the polyanion is preferred.

### [Water-soluble organic solvents]

Examples of the water-soluble organic solvents include polar solvents such as N-methyl-2-pyrrolidone, N-methylacetamide, N,N-dimethylformamide, N,N-dimethylacetamide, dimethylsulfoxide, hexamethylene phosphortriamide, N-vinylpyrrolidone, N-vinylformamide and N-vinylacetamide, phenols such as cresol, phenol and xylenol, polyhydric aliphatic alcohols such as ethylene glycol, propylene glycol, dipropylene glycol, 1,3-butylene glycol, 1,4-butylene glycol, D-glucose, D-glucitol, isoprene glycol, butanediol, 1,5-pentanediol, 1,6-hexanediol, 1,9-nonanediol and neopentyl glycol, carbonate compounds such as ethylene carbonate and propylene carbonate, ether compounds such as dioxane and diethyl ether, chain-like ethers such as dialkyl ethers, propylene glycol dialkyl ethers, polyethylene glycol dialkyl ethers and polypropylene glycol dialkyl ethers, heterocyclic compounds such as 3-methyl-2-oxazolidinone, and nitrile compounds such as acetonitrile, glutaronitrile, methoxyacetonitrile, propionitrile and benzonitrile. These solvents may be used either individually, or as mixtures containing two or more different solvents.

### (Capacitor manufacturing method)

Next is a description of a first embodiment of the capacitor manufacturing method according to the present invention.
The capacitor manufacturing method of this embodiment has a step of preparing a capacitor substrate 10a by oxidizing the surface of the anode 11 to form the dielectric layer 12, a step of forming the solid electrolyte layer 14 on the surface of the dielectric layer 12 of the capacitor substrate 10a, and a step of forming the cathode 13 on the surface of the solid electrolyte layer 14.

In the step of preparing the capacitor substrate 10a, an example of the method used for electrolytically oxidizing the surface of the anode 11 is a method in which the surface of the anode 11 is oxidized within an electrolyte such as an aqueous solution of ammonium adipate by applying a voltage.

In the step of forming the solid electrolyte layer 14, a film-formation treatment that involves applying a conductive polymer solution to the dielectric layer 12 of the capacitor substrate 10a, and then drying the solution using a drying method such as hot-air drying, infrared heat drying or vacuum drying to form a conductive polymer film, is repeated at least twice. During this step, a solution containing a π-conjugated conductive polymer, a polyanion and a solvent is used as the conductive polymer solution.
In this step, the conductive polymer solution used in at least one film-formation treatment among the second film-formation treatment and subsequent film-formation treatments is a high-viscosity solution having a higher viscosity than the conductive polymer solution used in the first film-formation treatment. Hereinafter, the conductive polymer solution used in the first film-formation treatment is referred to as "the low-viscosity solution", and the solution used in at least one film-formation treatment among the second film-formation treatment and subsequent film-formation treatments that has a higher viscosity than the low-viscosity solution is referred to as "the high-viscosity solution." Furthermore, the conductive polymer film formed during an nth film-formation treatment is referred to as the "conductive polymer film (n)." For example, the conductive polymer film formed during the first film-formation treatment is termed "the conductive polymer film (1)." The layer obtained by stacking each of the conductive polymer films (n) becomes the solid electrolyte layer 14.

The number of repetitions of the film-formation treatment is preferably two in terms of productivity, but in those cases where a thicker solid electrolyte layer 14 is required, three or more repetitions (namely, 3, 4 or 5 repetitions or the like) are preferred.

### [Solvent]

There are no particular limitations on the solvent contained within the conductive polymer solution, and examples include water, alcohols such as methanol, ethanol, propanol and butanol, carbonate compounds such as ethylene carbonate and propylene carbonate, phenols such as cresol, phenol and xylenol, ketones such as acetone and methyl ethyl ketone, hydrocarbons such as hexane, benzene and toluene, ether compounds such as dioxane, 2-methyltetrahydrofuran and diethyl ether, nitrile compounds such as acetonitrile, glutaronitrile, methoxyacetonitrile, propionitrile and benzonitrile, as well as N,N-dimethylformamide, N,N-dimethylacetamide, N-methyl-2-pyrrolidone, hexamethylene phosphortriamide, 1,3-dimethyl-2-imidazolidine, dimethylimidazoline, ethyl acetate, dimethylsulfoxide, sulfolane, and diphenylsulfonic acid. These solvents may be used individually, as mixtures containing two or more of the above solvents, or as mixtures with other organic solvents.
Of the above solvents, in terms of handling properties, water or an alcohol is preferred.

### (Additives)

If required, additives may be included in the conductive polymer solution.
There are no particular limitations on these additives, provided they are able to be mixed with the π-conjugated conductive polymer and the polyanion, and examples of additives that can be used include alkaline compounds, surfactants, antifoaming agents, coupling agents, antioxidants, ultraviolet absorbers, organotitanium compounds and organozirconium compounds.
As the alkaline compounds, conventional inorganic alkaline compounds or organic alkaline compounds can be used. Examples of the inorganic alkaline compounds include sodium hydroxide, potassium hydroxide, calcium hydroxide and ammonia.
Examples of the organic alkaline compounds include aliphatic amines, aromatic amines, quaternary amines, nitrogen-containing compounds other than amines, metal alkoxides, and dimethylsulfoxide. Of these, one or more compounds selected from the group consisting of aliphatic amines, aromatic amines and quaternary amines is preferred in terms of maximizing the increase in conductivity.
Examples of the surfactants include anionic surfactants such as carboxylates, sulfonates, sulfates and phosphates; cationic surfactants such as amine salts and quaternary ammonium salts; amphoteric surfactants such as carboxybetaines, aminocarboxylates, and imidazolium betaines; and non-ionic surfactants such as polyoxyethylene alkyl ethers, polyoxyethylene glycerol fatty acid esters, ethylene glycol fatty acid esters, and polyoxyethylene fatty acid amides.
Examples of the antifoaming agents include silicone resins, polydimethylsiloxane, and silicone resins.
Examples of the coupling agents include silane coupling agents having a vinyl group, amino group or epoxy group.
Examples of the antioxidants include phenol-based antioxidants, amine-based antioxidants, phosphorus-based antioxidants, sulfur-based antioxidants, sugars, and vitamins.
Examples of the ultraviolet absorbers include benzotriazole-based ultraviolet absorbers, benzophenone-based ultraviolet absorbers, salicylate-based ultraviolet absorbers, cyanoacrylate-based ultraviolet absorbers, oxanilide-based ultraviolet absorbers, hindered amine-based ultraviolet absorbers and benzoate-based ultraviolet absorbers.
The antioxidants and ultraviolet absorbers are preferably used in combination.
Examples of the organotitanium compounds include titanium alkoxides, titanium chelates and titanium acylates.
Examples of the organozirconium compounds include zirconium alkoxides, zirconium chelates and zirconium acylates.

### [Low-viscosity solution]

In terms of enhancing the permeation properties, the viscosity of the low-viscosity solution is preferably not more than 100 mPa·s, more preferably not more than 50 mPa·s, and still more preferably 30 mPa·s or less. Further, in terms of enabling uniform film formation, the viscosity of the low-viscosity solution is preferably at least 5 mPa·s.

Viscosity values in the present invention refer to values obtained by measuring a sample of the conductive polymer solution at 25°C using a tuning fork vibration-type viscosity measuring apparatus (SV-type viscometer SV-10, manufactured by A&D Company, Limited). In this tuning fork vibration-type viscosity measuring apparatus, the viscosity is measured in accordance with the JCSS standard, by positioning an electromagnetic drive unit at the center of two sensor plates having a tuning fork shape, resonating the sensor plates at a constant amplitude within the solution, measuring the oscillator viscosity resistance in terms of the electric current that acts as the excitation force, and then determining the viscosity based on a relational expression between the electric current and the viscosity which is stored in a storage unit. The JCSS standard is described in detail in "Technological trends and standardization in viscosity measurement, and recent market demands", published by the Japan Association for Metrology Promotion, "Measurement standards and measurement controls", 2008, vol. 58(1).

Examples of methods that may be used for lowering the viscosity of the conductive polymer solution include lowering the solid fraction concentration of the conductive polymer solution, using a low-molecular weight polyanion, adding a low-viscosity solvent component, or enhancing the dispersibility of the π-conjugated conductive polymer. Any one of these methods may be used alone, or a combination of two or more methods may be used.

In the method that involves lowering the solid fraction concentration of the conductive polymer solution, dilution is used to lower the solid fraction concentration to a value that is preferably within a range from 0.5 to 3.0 mass%, and more preferably from 1.0 to 2.0 mass%. Provided the solid fraction concentration is at least 0.5 mass%, the conductive polymer film (1) can be formed easily, and provided the concentration is not more than 3.0 mass%, the viscosity of the solution can be lowered, enabling the conductive polymer solution to permeate readily into the interior of the porous capacitor substrate 10a.

In the method that uses a low-molecular weight polyanion, the weight average molecular weight of the polyanion is preferably within a range from 100,000 to 1,000,000, and more preferably from 200,000 to 800,000. By ensuring that the weight average molecular weight of the polyanion is not less than 100,000 and not more than 1,000,000, the viscosity of the conductive polymer solution can be lowered, enabling the conductive polymer solution to permeate readily into the interior of the porous capacitor substrate 10a.

In the method that involves adding a low-viscosity solvent component, examples of the low-viscosity solvent component include alcohol-based solvents such as methanol and ether-based solvents such as diethyl ether.

Examples of methods of enhancing the dispersibility of the conductive polymer solution include high-pressure dispersion methods, ultrasonic dispersion methods and high-speed fluid dispersion methods.

A high-pressure dispersion treatment is a treatment in which a high-speed dispersion device is used to subject the conductive polymer solution undergoing treatment, which contains the π-conjugated conductive polymer, the polyanion and a solvent, to coaxial impingement at high pressure, or to pass the solution through an orifice or slit under high pressure, thereby dispersing the polyanion or the complex of the π-conjugated conductive polymer and the polyanion.
As the high-speed dispersion device, a commercially available high-pressure dispersion device such as a high-pressure homogenizer can be used favorably.
A high-pressure homogenizer is a device that is equipped with, for example, a high pressure generation unit that pressurizes the solution or the like undergoing the dispersion treatment, and a coaxial impingement section, orifice or slit section that performs the dispersion. As the high pressure generation unit, a high-pressure pump such as a plunger pump is ideal. High-pressure pumps exist in a variety of models including single barrel, double barrel and triple barrel models, and any of these models may be employed in the present invention.
In those cases where the conductive polymer solution undergoing treatment is subjected to coaxial impingement at high pressure during the high-pressure dispersion treatment, in order to achieve a superior high-pressure dispersion effect, the treatment pressure is preferably at least 50 MPa, more preferably 100 MPa or greater, and even more preferably 130 MPa or greater. Further, at treatment pressures exceeding 300 MPa, problems tend to arise in relation to the pressure resistance and durability of the high-pressure dispersion device, and therefore the treatment pressure is preferably not more than 300 MPa.
In those cases where the conductive polymer solution undergoing treatment is passed through an orifice or slit during the high-pressure dispersion treatment, in order to achieve a superior high-pressure dispersion effect, the pressure difference between the upstream and downstream sides is preferably at least 50 MPa, more preferably 100 MPa or greater, and even more preferably 130 MPa or greater. Further, at pressure difference values exceeding 300 MPa, problems tend to arise in relation to the pressure resistance and durability of the high-pressure dispersion device, and therefore the pressure difference is preferably not more than 300 MPa.
The above-mentioned orifice describes a mechanism wherein a thin plate (orifice plate) having a fme hole with a circular shape or the like is inserted inside a straight pipe, causing a rapid narrowing of the flow path within the pipe.
The above-mentioned slit describes a mechanism wherein a pair of members made of a robust material such as a metal or diamond are positioned with a small gap therebetween.

Although there are no particular limitations on the number of treatment repetitions performed of the high-pressure dispersion treatment, a number of treatments within a range from 1 to several dozen is preferable. The reason for this preference is that even if the number of dispersion treatments is increased beyond a certain level, a corresponding improvement in the dispersion effect is not observed.
When a high-pressure dispersion treatment is performed using a high-pressure dispersion device, then in principle, the temperature of the liquid increases following the treatment. Accordingly, the temperature of the conductive polymer solution undergoing treatment is adjusted, prior to the dispersion treatment, to a temperature that is preferably within a range from -20 to 60°C, more preferably from -10 to 40°C, and still more preferably from -5 to 30°C. By ensuring that the temperature of the conductive polymer solution undergoing treatment is at least -20°C prior to the dispersion treatment, freezing of the solution can be prevented, whereas by ensuring the temperature is not more than 60°C, degeneration of the π-conjugated conductive polymer or the polyanion can be prevented.
Moreover, following the high-pressure dispersion treatment, the solution may be cooled by passage through a heat exchanger set to a cooling temperature of -30 to 20°C.

Specific examples of the high-pressure homogenizer include the Nanomizer (a product name, manufactured by Yoshida Kikai Co., Ltd.), the Microfluidizer (a product name, manufactured by Microfluidics Corporation), and the Multimizer (manufactured by Sugino Machine Limited).

An ultrasonic dispersion method is a method wherein the conductive polymer solution undergoing treatment is irradiated with ultrasound having a frequency of 10 to 50 kHz. This ultrasonic irradiation causes a cavitation phenomenon within the conductive polymer solution undergoing treatment, thereby imparting kinetic energy to the complex particles which causes increased collisions between the complex particles and leads to enhanced dispersion.
A portion of the ultrasonic wave energy irradiated into the conductive polymer solution undergoing treatment is converted to thermal energy, and therefore the temperature of the solution tends to increase following the ultrasound treatment. Accordingly, following the high-pressure dispersion treatment, the solution may be cooled by passage through a heat exchanger set to a cooling temperature of -30 to 20°C.

A high-speed fluid dispersion method is a method wherein the conductive polymer solution undergoing treatment is subjected to high-speed flow, so that complex particles undergo collision within the flow, causing dispersion.

The pH of the low-viscosity solution is preferably within a range from 3 to 13, and more preferably from 5 to 11. Provided the pH of the low-viscosity solution is at least 3, corrosion can be reduced and the leakage current can be minimized, whereas provided the pH is not more than 13, reductions in the conductivity can be suppressed. The pH values reported in the present invention represent values measured at 25°C using a typical pH measurement device (such as a pH meter or pH test paper).

The pH of the low-viscosity solution may be altered by appropriate addition of an alkaline compound. As the alkaline compound, a conventional inorganic alkaline compound or organic alkaline compound can be used.
Examples of the inorganic alkaline compound include sodium hydroxide, potassium hydroxide, calcium hydroxide and ammonia.
Examples of organic alkaline compounds that can be used favorably include nitrogen-containing aromatic cyclic compounds (aromatic amines), aliphatic amines and metal alkoxides.
Examples of the nitrogen-containing aromatic cyclic compounds include the same compounds as those mentioned above.
Examples of the aliphatic amines include ethylamine, n-octylamine, diethylamine, diisobutylamine, methylethylamine, trimethylamine, triethylamine, allylamine, 2-ethylaminoethanol, 2,2'-iminodiethanol and N-ethylethylenediamine.
Examples of the metal alkoxides include sodium alkoxides such as sodium methoxide and sodium ethoxide, as well as potassium alkoxides and calcium alkoxides.

### [High-viscosity solution]

The viscosity of the high-viscosity solution is preferably within a range from 50 to 300 mPa·s, and more preferably from 80 to 200 mPa·s. Provided the viscosity of the high-viscosity solution is at least 50 mPa·s, the desired film thickness can be achieved with a minimal number of applications, and provided the viscosity is not more than 300 mPa·s, uniform film formation can be achieved.

Examples of methods that may be used for increasing the viscosity of the conductive polymer solution include increasing the solid fraction concentration of the conductive polymer solution, using a high-molecular weight polyanion, adding a high-viscosity solvent component, adding a thickening dispersant, or adding a resin component. Any one of these methods may be used alone, or a combination of two or more methods may be used.

In the method that involves increasing the solid fraction concentration of the conductive polymer solution, concentration is used to increase the solid fraction concentration to a value that is preferably within a range from 1.5 to 10.0 mass%, and more preferably from 2.0 to 5.0 mass%. Provided the solid fraction concentration is at least 1.5 mass%, the conductive polymer film (n) can be formed easily in the second film-formation treatment or subsequent film-formation treatments, and provided the concentration is not more than 10.0 mass%, the conductive polymer solution is able to permeate readily into the interior of the porous capacitor substrate 10a.

In the method that uses a high-molecular weight polyanion, the weight average molecular weight of the polyanion is preferably within a range from 200,000 to 2,000,000, and more preferably from 300,000 to 1,000,000. By ensuring that the weight average molecular weight of the polyanion is at least 200,000, the dispersibility of the complex can be improved, and provided the weight average molecular weight is not more than 2,000,000, the π-conjugated conductive polymer can be dissolved satisfactorily, and the conductivity of the resulting solid electrolyte layer 14 can be satisfactorily enhanced.

In the method that involves adding a high-viscosity solvent component, examples of the high-viscosity solvent component include glycols such as polyethylene glycol (having a molecular weight of 2,000 or greater).

In order to enable satisfactory formation of the conductive polymer film (1) on the surface of the dielectric layer 12 and ensure reliable formation of the conductive polymer film (n) (wherein n is a number of 2 or greater) on the surface of the conductive polymer film (1), the difference between the viscosity of the high-viscosity solution and the viscosity of the low-viscosity solution is preferably at least 50 mPa·s. Further, from a practical viewpoint, the difference between the viscosity of the high-viscosity solution and the viscosity of the low-viscosity solution is preferably not more than 300 mPa·s.

Examples of application methods that may be used for applying the low-viscosity solution and the high-viscosity solution include dipping methods (namely, dip coating), as well as comma coating, reverse coating, lip coating and micro gravure coating methods. Of these, dipping methods are preferred in terms of simplicity.
When the capacitor substrate 10a is dipped in the low-viscosity solution and the high-viscosity solution, the low-viscosity solution and high-viscosity solution may be pressurized, or the pressure of the capacitor substrate 10a may be reduced.

In the step of forming the cathode 13, a method may be employed wherein, for example, a silver paste and/or a carbon paste is applied to, and then dried on, the surface of the solid electrolyte layer 14 obtained in the manner described above.
As described above, the capacitor 10 is prepared by forming the dielectric layer 12, the solid electrolyte layer 14 and the cathode 13.

In the capacitor manufacturing method of the first embodiment described above, because the low-viscosity solution is applied to the capacitor substrate 10a in the first film-formation treatment, the solution is able to readily permeate the substrate to form the conductive polymer film (1) even if the surface of the capacitor substrate 10a is porous. Further, in the second and/or subsequent film-formation treatments, because the high-viscosity solution is applied, the required film thickness can be achieved with a minimal number of film-formation treatments. Accordingly, the solid electrolyte layer 14 can be formed with comparative ease.
Further, in the above manufacturing method, which does not employ chemical oxidative polymerization, a capacitor with a high withstand voltage can be obtained even if the solid electrolyte layer 14 is not washed following formation. As a result, the washing step(s) can be omitted, which simplifies the manufacturing method and improves the capacitor productivity.
Furthermore, in this manufacturing method, because the solid electrolyte layer 14 can be formed right down into the depths of the holes within the porous capacitor substrate 10a, a capacitor can be manufactured that has a high electrostatic capacitance and a satisfactorily small ESR.

### EXAMPLES

### (1) Preparation of conductive polymer solutions (I), (II) and (III)

14.2 g of 3,4-ethylenedioxythiophene and a solution prepared by dissolving 27.5 g of a polystyrenesulfonic acid (weight average molecular weight: approximately 250,000) in 1,000 ml of ion-exchanged water were mixed at 25°C.
With the thus obtained mixed solution undergoing constant stirring at 25°C, an oxidation catalyst solution containing 29.64 g of ammonium persulfate and 4.0 g of ferric sulfate dissolved in 200 ml of ion-exchanged water was added, and the resulting mixture was then stirred and reacted overnight.
The resulting reaction mixture was subjected to a dialysis treatment, thereby removing the unreacted monomer, oxidant residues and oxidation catalyst residues, and yielding an aqueous complex solution (I) containing approximately 1.7 mass% of a polystyrenesulfonic acid/poly(3,4-ethylenedioxythiophene) complex.
0.3 g of imidazole and 10 g of diethylene glycol were added to 100 g of the obtained aqueous complex solution (I), thus yielding a mixed solution.
The thus obtained mixed solution was dispersed by a high-pressure dispersion treatment to obtain a solution viscosity at 25°C of 40 mPa·s, thus completing preparation of a conductive polymer solution (I).
Further, the conductive polymer solution (I) was then subjected to additional high-pressure dispersion treatment to prepare a conductive polymer solution (II) with a viscosity at 25°C of 25 mPa·s and a conductive polymer solution (III) with a viscosity at 25°C of 18 mPa·s.
The pH value at 25°C for each of the conductive polymer solutions (I) to (III) was 8 in each case.

### (2) Preparation of conductive polymer solution (IV)

0.3 g of imidazole, 10 g of diethylene glycol and 20 g of ion-exchanged water were added to 100 g of the aqueous complex solution (I) obtained during the preparation of the conductive polymer solution (I), thus yielding a mixed solution.
The thus obtained mixed solution was dispersed by a high-pressure dispersion treatment to obtain a solution viscosity at 25°C of 8 mPa·s, thus completing preparation of a conductive polymer solution (IV). The pH value at 25°C for the conductive polymer solution (IV) was 8.

### (3) Preparation of conductive polymer solutions (V) and (VI)

The aqueous complex solution (I) obtained during the preparation of the conductive polymer solution (I) was concentrated under pressure until the amount of the polystyrenesulfonic acid/poly(3,4-ethylenedioxythiophene) complex reached approximately 3.5 mass%, thus yielding an aqueous complex solution (II).
0.26 g of imidazole and 10 g of diethylene glycol were added to 100 g of the obtained aqueous complex solution (II), and the thus obtained mixed solution was dispersed by a high-pressure dispersion treatment to obtain a solution viscosity at 25°C of 150 mPa·s, thus completing preparation of a conductive polymer solution (V).
Further, the conductive polymer solution (V) was then subjected to additional dispersion to obtain a viscosity at 25°C of 80 mPa·s, thus completing preparation of a conductive polymer solution (VI).
The pH values at 25°C for each of the conductive polymer solutions (V) and (VI) was 8 in each case.

### (4) Manufacture of capacitor substrate

An etched aluminum foil (an anode foil) was cut to dimensions of 10 mm × 20 mm, and was then subjected to a chemical conversion treatment (an oxidation treatment) by applying a voltage of 50 V within a 10 mass% aqueous solution of ammonium adipate, thereby forming a dielectric layer on the surface of the aluminum foil and completing preparation of a capacitor substrate. □

### (5) Manufacture of capacitor

### (Example 1)

A capacitor substrate prepared in (4) above was subjected to 5 repetitions of the steps of dipping the substrate in the conductive polymer solution (I), gradually pulling the substrate up out of the solution, and then drying the substrate for 10 minutes using a 150°C hot-air dryer, thereby forming a conductive polymer film (1) on the surface of the dielectric layer of the capacitor substrate (the first film formation).
Subsequently, the capacitor substrate with the conductive polymer film (1) formed thereon was subjected to two repetitions of the steps of dipping the capacitor substrate in the conductive polymer solution (V), gradually pulling the substrate up out of the solution, and then drying the substrate for 60 minutes using a 150°C hot-air dryer, thereby forming a conductive polymer film (2) on the outside of the conductive polymer film (1) (the second film formation).
Following subsequent formation of a carbon film and a silver film on the outside of the conductive polymer film (2), lead terminals were provided and a resin encapsulation was performed, thus yielding a capacitor with an effective surface area of 10 mm × 10 mm.
The electrostatic capacitance at 120 Hz and the initial value of the equivalent series resistance (ESR) at 100 kHz for the prepared capacitor were measured using a LCZ meter 2345 (manufactured by NF Corporation). The results of the measurements are shown in Table 1.

**[Table 1]**

| | First film formation | Second film formation | Electrostatic capacitance (µF) | ESR (mΩ) | Withstand voltage (V) |
|---|---|---|---|---|---|
| Example 1 | I | V | 21.5 | 15.0 | 45 |
| Example 2 | II | V | 22.0 | 12.5 | 45 |
| Example 3 | III | V | 22.1 | 12.3 | 46 |
| Example 4 | III | VI | 22.2 | 11.5 | 46 |
| Example 5 | IV | V | 22.7 | 11.3 | 45 |
| Comparative example 1 | V | - | 5.4 | 105.0 | 42 |
| Comparative example 2 | VI | - | 6.7 | 98.0 | 43 |
| Comparative example 3 | Chemical polymerization | V | 21.6 | 23.0 | 32 |
| Comparative example 4 | Chemical polymerization | VI | 21.8 | 21.5 | 33 |

### (Example 2)

With the exception of changing the conductive polymer solution (I) used in the first film formation in example 1 to the conductive polymer solution (II), a capacitor was prepared and evaluated in the same manner as that described for example 1. The results of the evaluations are shown in Table 1.

### (Example 3)

With the exception of changing the conductive polymer solution (I) used in the first film formation in example 1 to the conductive polymer solution (III), a capacitor was prepared and evaluated in the same manner as that described for example 1. The results of the evaluations are shown in Table 1.

### (Example 4)

A capacitor substrate prepared in (4) above was subjected to 5 repetitions of the steps of dipping the substrate in the conductive polymer solution (III), gradually pulling the substrate up out of the solution, and then drying the substrate for 10 minutes using a 150°C hot-air dryer, thereby forming a conductive polymer film (1) on the surface of the dielectric layer of the capacitor substrate (the first film formation).
Subsequently, the capacitor substrate with the conductive polymer film (1) formed thereon was subjected to two repetitions of the steps of dipping the capacitor substrate in the conductive polymer solution (VI), gradually pulling the substrate up out of the solution, and then drying the substrate for 60 minutes using a 150°C hot-air dryer, thereby forming a conductive polymer film (2) on the outside of the conductive polymer film (1) (the second film formation).
Following subsequent formation of a carbon film and a silver film on the outside of the conductive polymer film (2), lead terminals were provided and a resin encapsulation was performed, thus yielding a capacitor with an effective surface area of 10 mm × 10 mm. This capacitor was evaluated in the same manner as example 1. The results of the evaluations are shown in Table 1.

### (Example 5)

A capacitor substrate prepared in (4) above was subjected to 10 repetitions of the steps of dipping the substrate in the conductive polymer solution (IV), gradually pulling the substrate up out of the solution, and then drying the substrate for 10 minutes using a 150°C hot-air dryer, thereby forming a conductive polymer film (1) on the surface of the dielectric layer of the capacitor substrate.
Subsequently, the capacitor substrate with the conductive polymer film (1) formed thereon was subjected to two repetitions of the steps of dipping the capacitor substrate in the conductive polymer solution (V), gradually pulling the substrate up out of the solution, and then drying the substrate for 60 minutes using a 150°C hot-air dryer, thereby forming a conductive polymer film (2) on the outside of the conductive polymer film (1).
Following subsequent formation of a carbon film and a silver film on the outside of the conductive polymer film (2), lead terminals were provided and a resin encapsulation was performed, thus yielding a capacitor with an effective surface area of 10 mm × 10 mm. This capacitor was evaluated in the same manner as example 1. The results of the evaluations are shown in Table 1.

### (Comparative example 1)

A capacitor substrate was subjected to 3 repetitions of the steps of dipping the substrate in the conductive polymer solution (V), gradually pulling the substrate up out of the solution, and then drying the substrate for 30 minutes using a 150°C hot-air dryer, thereby forming a conductive polymer film (1) on the surface of the dielectric layer of the capacitor substrate.
Following subsequent formation of a carbon film and a silver film on the outside of the conductive polymer film (1), lead terminals were provided and a resin encapsulation was performed, thus yielding a capacitor with an effective surface area of 10 mm × 10 mm. This capacitor was evaluated in the same manner as example 1. The results of the evaluations are shown in Table 1.

### (Comparative example 2)

A capacitor substrate was subjected to 3 repetitions of the steps of dipping the substrate in the conductive polymer solution (VI), gradually pulling the substrate up out of the solution, and then drying the substrate for 30 minutes using a 150°C hot-air dryer, thereby forming a conductive polymer film (1) on the surface of the dielectric layer of the capacitor substrate.
Following subsequent formation of a carbon film and a silver film on the outside of the conductive polymer film (1), lead terminals were provided and a resin encapsulation was performed, thus yielding a capacitor with an effective surface area of 10 mm × 10 mm. This capacitor was evaluated in the same manner as example 1. The results of the evaluations are shown in Table 1.

### (Comparative example 3)

A capacitor substrate prepared in (4) above was dipped in a solution containing 3,4-ethylenedioxythiophene monomer and iron p-toluenesulfonate, and a conductive polymer film (1) composed of poly(3,4-ethylenedioxythiophene) was formed by chemical oxidative polymerization under heating at 40°C.
Subsequently, the capacitor substrate with the conductive polymer film (1) formed thereon was subjected to two repetitions of the steps of dipping the capacitor substrate in the conductive polymer solution (V), gradually pulling the substrate up out of the solution, and then drying the substrate for 60 minutes using a 150°C hot-air dryer, thereby forming a conductive polymer film (2) on the outside of the conductive polymer film (1).
Following subsequent formation of a carbon film and a silver film on the outside of the conductive polymer film (2), lead terminals were provided and a resin encapsulation was performed, thus yielding a capacitor with an effective surface area of 10 mm × 10 mm. This capacitor was evaluated in the same manner as example 1. The results of the evaluations are shown in Table 1.

### (Comparative example 4)

A capacitor substrate prepared in (4) above was dipped in a solution containing 3,4-ethylenedioxythiophene monomer and iron p-toluenesulfonate, and a conductive polymer film (1) composed of poly(3,4-ethylenedioxythiophene) was formed by chemical oxidative polymerization under heating at 40°C.
Subsequently, the capacitor substrate with the conductive polymer film (1) formed thereon was subjected to two repetitions of the steps of dipping the capacitor substrate in the conductive polymer solution (VI), gradually pulling the substrate up out of the solution, and then drying the substrate for 60 minutes using a 150°C hot-air dryer, thereby forming a conductive polymer film (2) on the outside of the conductive polymer film (1).
Following subsequent formation of a carbon film and a silver film on the outside of the conductive polymer film (2), lead terminals were provided and a resin encapsulation was performed, thus yielding a capacitor with an effective surface area of 10 mm × 10 mm. This capacitor was evaluated in the same manner as example 1. The results of the evaluations are shown in Table 1.

In the manufacturing methods of examples 1 to 5, in which the viscosity of the conductive polymer solution used in the second film-formation treatment was higher than the viscosity of the conductive polymer solution used in the first film-formation treatment, a capacitor with a high withstand voltage was able to be manufactured with comparative ease. Moreover, the capacitors exhibited favorable electrostatic capacitance and low ESR values.
In contrast, in the manufacturing methods of comparative examples 1 and 2, in which the solid electrolyte layer was formed by a single series of dippings of the capacitor substrate in a high-viscosity conductive polymer solution, the electrostatic capacitance of the resulting capacitors was low, and the ESR was high.
In the manufacturing methods of comparative examples 3 and 4, in which the first film-formation treatment was performed by chemical oxidative polymerization, the ESR of the obtained capacitors was high.

### INDUSTRIAL APPLICABILITY

According to the capacitor manufacturing method of the present invention, a capacitor having a high withstand voltage, a high electrostatic capacitance and a satisfactorily small ESR can be manufactured simply and at a high level of productivity, and the invention can therefore be used very advantageously.

### DESCRIPTION OF THE REFERENCE SIGNS

- 10:: Capacitor
- 10a:: Capacitor substrate
- 11:: Anode
- 12:: Dielectric layer
- 13:: Cathode
- 14:: Solid electrolyte layer

## Claims

1. A capacitor manufacturing method, comprising a step of preparing a capacitor substrate by oxidizing a surface of an anode composed of a valve metal to form a dielectric layer, and a step of forming a solid electrolyte layer on a surface of the dielectric layer of the capacitor substrate, wherein
in the step of forming a solid electrolyte layer, a film-formation treatment of applying a conductive polymer solution containing a π-conjugated conductive polymer, a polyanion and a solvent to the dielectric layer of the capacitor substrate, and then performing drying to form a conductive polymer film is performed at least twice, and
a conductive polymer solution used in at least one film-formation treatment among a second film-formation treatment and subsequent film-formation treatments is a high-viscosity solution having a higher viscosity than a conductive polymer solution used in a first film-formation treatment.

2. The capacitor manufacturing method according to claim 1, wherein a viscosity of the conductive polymer solution used in the first film-formation treatment is within a range from 5 to 100 mPa·s.

3. The capacitor manufacturing method according to claim 2, wherein a difference between a viscosity of the high-viscosity solution and a viscosity of the conductive polymer solution used in the first film-formation treatment is at least 50 mPa·s.

4. The capacitor manufacturing method according to any one of claims 1 to 3, wherein a pH of the conductive polymer solution used in the first film-formation treatment is within a range from 3 to 11.
